# EUROPEAN PATENT APPLICATION

(11) **EP 0 902 372 A1**
(43) Date of publication of application: **17.03.1999**
(21) Application number: 97115965.2
(22) Date of filing: 13.09.1997
(51) Int. Cl.: G06F 13/40

(54) **PCI I/O interface card**

(71) Applicant: Lin, Ming-Cheng, Hsintien City, Taipei Hsien (TW)
(72) Inventor: Lin, Ming-Cheng, Hsintien City, Taipei Hsien (TW)
(74) Representative: Patentanwälte Hauck, Graalfs, Wehnert, Döring, Siemons

(57) **Abstract**

A PCI I/O interface card, which is of a "plug and play" type, is connected with PCI bus expansion slots of a motherboard and performs conversion between a PCI bus and an ISA bus to provide additional ISA bus input/output ports for peripheral devices to use.

## Description

The present invention relates to a peripheral component interconnect (PCI) input/output (I/O) card, more particularly, to an I/O interface card, which can be plugged in PCI bus expansion slots of a motherboard lacking ISA bus expansion slots to perform conversion between a PCI bus and an ISA bus, so that peripheral devices using ISA buses can be utilized with the motherboard.

Attempts have been made to standardize computer buses to achieve compatibility between a motherboard and peripheral devices. Conventional standardized buses such as an industry standard architecture (ISA) bus, an extended industry standard architecture (EISA) bus and a VESA local bus (VLBUS) are well known in the prior art.

The ISA bus is unsatisfactory since its data transmission efficiency (eight bits; transmission speed of 8 MHz) is low. The EISA bus is a 32-bit bus, however, the transmission speed thereof is still only of 8 MHz, and because a chipset for the EISA bus is very expensive, it has been eliminated now. The VLBUS is also a 32-bit bus. The architecture of the VLBUS utilizes a CPU bus as an expanded bus, so that the load of the CPU is increased.

A peripheral component interconnect (PCI) bus is another one of the standardized buses. The PCI bus is a high performance 32-bit or 64-bit bus with multiplexed address, control and data lines. More and more computers have been adopting the PCI bus in recent times.

Although a current motherboard still has some ISA bus expansion slots for conventional add-on cards to plug therein, it can be predicted that all of the ISA bus expansion slots will be replaced by PCI bus expansion slots in the near future. That is, a motherboard will be contain only the PCI bus expansion slots.

Under such a situation, peripheral devices relevant to the ISA bus cannot be used, such as a parallel port (printer port) and a serial port (RS232), which use the ISA bus.

In addition, although a current motherboard has a built-in ISA bus printer port and two built-in ISA bus RS232 interfaces, the printer port and the RS232 interfaces are commonly in use with a printer, a mouse and a modem. Namely, there are no vacant connecting ports for use by other peripheral devices such as a scanner, an external hard disc drive, an external CD-ROM, an external soft disc drive, a digital camera and the like.

One object of the present invention is to provide a PCI I/O interface card, which is connected with PCI bus expansion slots and performs conversion between a PCI bus and an ISA bus to provide additional ISA bus input/output ports for peripheral devices to use.

Another object of the present invention is to provide a PCI I/O interface card, which is a "plug and play" (PnP) interface card. The PCI I/O interface card can be directly plugged in the PCI bus expansion slots to perform the conversion between the PCI bus and the ISA bus, so as to provide serial ports and parallel ports for connecting with the peripheral devices.

A further object of the present invention is to provide a PCI I/O interface card, which provides a serial port (RS232 port) having a serial transmission speed of 960 Kbps (about eight times the serial transmission speed of a conventional RS232 port).

In accordance with one aspect of the present invention, the PCI I/O interface card comprises a signal converting circuit, a memory, an I/O circuit and an oscillator. The signal conversion circuit functions as a bridge between the PCI bus and the ISA bus, so that bi-directional communication between the motherboard using the PCI bus and the peripheral devices using the ISA bus can be attained.

In accordance with another aspect of the present invention, the PCI I/O interface card comprises PCI plugs for plugging in the PCI bus expansion slots of the motherboard, and the memory of the PCI I/O interface card stores necessary signals, so that the PCI I/O interface card can be a "plug and play" interface card.

In accordance with a further aspect of the present invention, the PCI I/O interface card comprises a frequency divider connected between the oscillator and the I/O circuit so as to provide a proper clock to the I/O circuit depending on the specification of the peripheral devices to be connected.

Other objects, advantages and novel features of the invention will become more apparent from the following detailed description when taken in conjunction with the accompanying drawings.

### IN THE DRAWINGS

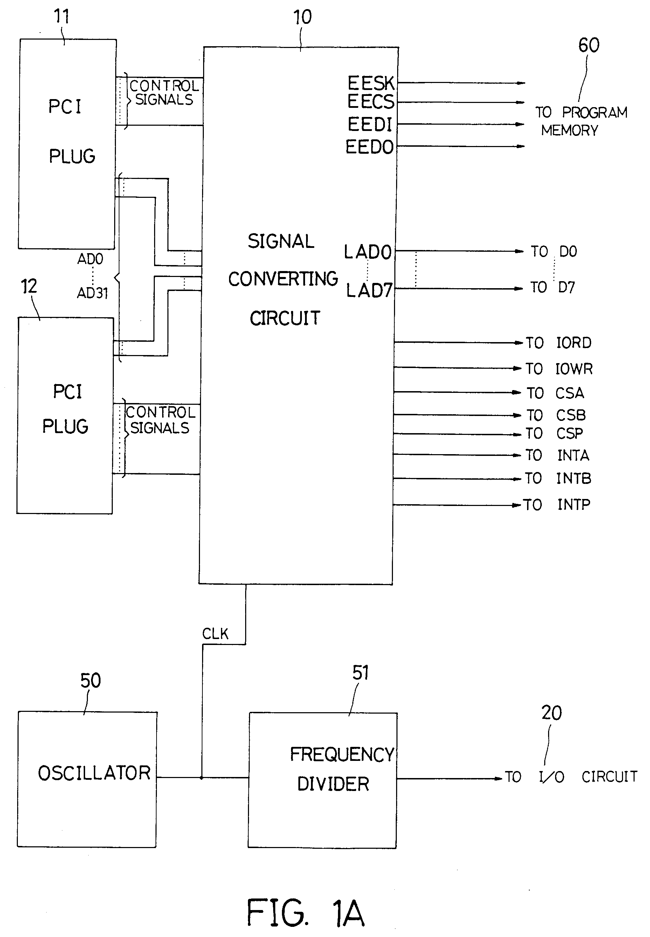

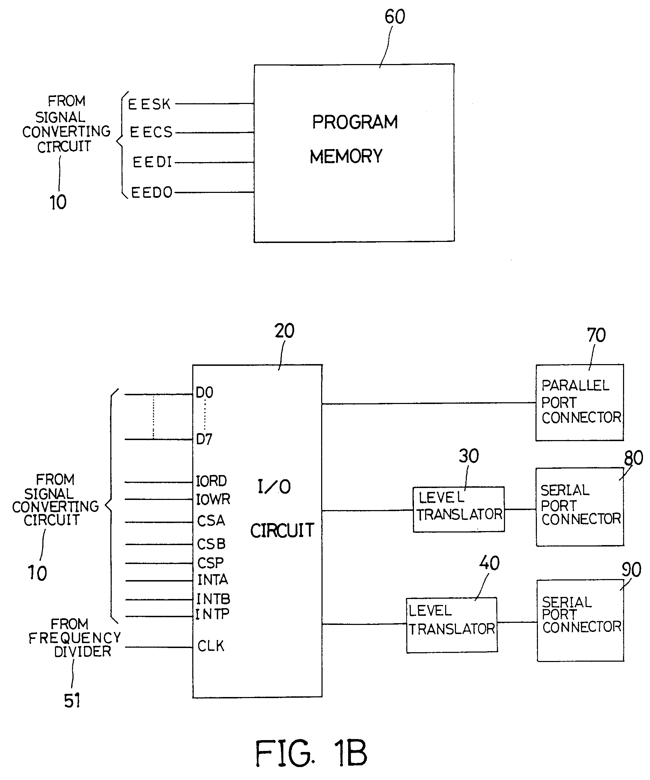

Figs. 1A and 1B show a block diagram of a PCI I/O interface card in accordance with the present invention.

Referring to Figs. 1A and 1B, a PCI I/O interface card in accordance with an embodiment of the present invention comprises two PCI plugs 11 and 12 to be plugged in PCI bus expansion slots of a motherboard, a signal converting circuit 10 connected with the PCI plugs 11 and 12 to perform the conversion between a PCI bus and an ISA bus, an I/O circuit 20 connected to the signal converting circuit 10; a parallel port connector 70 connected to the I/O circuit 20, two serial port connectors 80, 90 connected to the I/O circuit 20 via two level translators 30, 40 respectively, an oscillator 50 for providing a clock to the signal converting circuit 10 and the I/O circuit, a frequency divider 51 for diving the clock from the oscillator 50 and outputting a new clock with divided frequency to the I/O circuit, and a program memory 60 connected with the signal converting circuit 10.

Although one parallel port connector 70 and two serial port connectors 80, 90 are provided (1P2S) in this embodiment, the numbers of the connectors can be changed as desired, such as only one parallel port (1P); only one serial port (1S); one parallel port and one serial port (1P1S); two serial ports (2S) or two parallel ports (2P)

The PCI plugs 11, 12 can be simply formed as golden fingers. The arrangement of pins of the PCI plugs 11, 12 corresponds to terminals of the PCI bus expansion slots of the motherboard. The PCI plugs 11, 12 have thirty-two address/ data lines (AD0-AD31) and other control signal lines connected to the signal converting circuit 10 from the pins. The oscillator 50 provides a clock signal of 14.7456 MHz to the signal converting circuit 10.

A frequency divider 51 is provided to receive the clock generated by the oscillator 50 and divide the frequency by eight to send a clock with a frequency of 1.8432 MHz (14.7456÷8) to the I/O circuit 20 to be adaptable for conventional peripheral devices requiring such a frequency. However, if some peripheral devices requiring a high frequency are connected to the PCI I/O interface card, the clock generated from the oscillator 50 can be directly provided to the I/O circuit 20, so that the transmission speed can be raised to 960 kbps. Accordingly, the PCI I/O interface card can be connected with a high speed modem or the like.

The pins of the signal converting circuit 10 such as clock (EESK), selecting signal (EECS) and data input/output lines (EEDI), (EEDO) are directly connected with the program memory 60. The program memory 60, which can be an electrically erasable programmable read-only memory (EEPROM), is used to store signals relevant to the "plug and play" function. Therefore, the PCI I/O interface card in accordance with the present invention can immediately perform communication with the motherboard and automatically identify and set up all of the necessary states, so that it is adoptable once the PCI plugs 11, 12 are plugged into the PCI bus expansion slots of the motherboard.

The signal converting circuit 10 further has eight data pins (LAD0-LAD7) being directly connected to the data terminals (D0-D7) of the I/O circuit 20. The read/write signals (IORD), (IOWR), chip selecting signals (CSA), (CSB), (CSP), and interrupt signals (INTA), (INTB), (INTP) of the I/O circuit 20 are connected with the corresponding pins of the signal converting circuit 10 directly or via logic gates.

In this embodiment, the I/O circuit 20 is directly connected to the parallel port connector 70, and is connected to the serial port connectors 80, 90 via level translators 30, 40 respectively. The connections between the I/O circuit 20 and the parallel and serial port connectors for the ISA bus are well known for the ISA bus in this field, and therefore the detailed description thereof is omitted herein.

As can be noted from the above, the main feature of the present invention is utilizing the signal converting circuit 10, which has an appropriately programmed firmware, to provide bi-directional communication between the PCI bus and the 8-bit ISA bus, and to permit the PCI interrupt signals to be converted into the control signals adaptable for the ISA bus. Accordingly, the signal converting circuit 10 can be directly connected with the 8-bit I/O circuit 20, so that the conventional interfaces using the ISA bus can operate with the PCI bus.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A PCI I/O interface card comprising:
at least one set of PCI bus pins for connecting to corresponding terminals of at least one PCI bus expansion slot on a motherboard;
a signal converting circuit connected with said PCI pins to perform conversion between PCI bus signals and ISA bus signals;
a memory connected to said signal converting circuit for storing programs to permit said PCI I/O interface card to be operable once said PCI pins are connected with the corresponding terminals of the PCI bus expansion slot;
an input/output circuit connected with the signal converting circuit to perform conversion between the ISA bus signals and input/output signals for adapting to peripheral devices to be connected; and
an oscillator connected to said signal converting circuit and said input/output circuit for providing the signal converting circuit and the input/output circuit with clock signals respectively.

2. The PCI I/O interface card as claimed in Claim 1, further comprising:
a frequency divider connected to said oscillator for receiving the clock signal from the oscillator to divide the frequency of said clock signal and providing a clock signal with the divided frequency to said input/output circuit.

3. The PCI I/O interface card as claimed in Claim 1, wherein said signal converting circuit performs conversion between 32-bit PCI bus signals and 8-bit ISA bus signals, and conversion between PCI control signals and ISA control signals.

4. The PCI I/O interface card as claimed in Claim 1, wherein said input/output circuit generates parallel port signals.

5. The PCI I/O interface card as claimed in Claim 4, wherein said input/output circuit is connected to at least one parallel port connector.

6. The PCI I/O interface card as claimed in Claim 1, wherein said input/output circuit generates serial port signals.

7. The PCI I/O interface card as claimed in Claim 6, wherein said input/output circuit is connected to at least one serial port connector.

8. The PCI I/O interface card as claimed in Claim 7, wherein said input/output circuit is connected to said serial port connector via a level translator.
